# EUROPÄISCHE PATENTSCHRIFT

(11) **EP 0 580 945 B1**
(45) Veröffentlichungstag und Bekanntmachung des Hinweises auf die Patenterteilung: **14.01.1998**
(21) Anmeldenummer: 93104169.3
(22) Anmeldetag: 15.03.1993
(51) Int. Cl.: A61C 8/00

(54) **Enossales Zahnimplantat für einen festsitzenden Zahnersatz sowie Einsetzwerkzeug**
Endo-osseous tooth implant for a fixed dental prosthesis and a fixing tool
Implant dentaire endo-osseux pour une prothèse dentaire fixe ainsi qu'un outil de fixation

(30) Priorität: 27.07.1992 DE 4224785
(43) Veröffentlichungstag der Anmeldung: 02.02.1994
(73) Patentinhaber: ALTATEC Medizintechnische Elemente GmbH & Co. KG., 75449 Wurmberg (DE); IMZ-Fertigungs- und Vertriebsgesellschaft für dentale Technologie mbH, 70794 Filderstadt (DE)
(72) Erfinder: Dürr, Walter, W-7537 Remchingen (DE); Kirsch, Axel, Dr., W-7024 Filderstadt (DE)
(74) Vertreter: Goddar, Heinz J., Dr.

(56) Entgegenhaltungen:
- EP-A- 0 475 299
- WO-A-92/03984
- FR-A- 2 623 999
- US-A- 4 907 969

## Beschreibung

Die Erfindung betrifft ein enossales Zahnimplantat für einen festsitzenden Zahnersatz, mit einem in den Kieferknochen implantierbaren, im wesentlichen zylindrischen Grundkörper aus Metall, in dessen an seinem koronalen Ende offene Innenbohrung, ggf. unter Zwischenschaltung einer Zwischenhülse aus elastischem Material, ein Implantatpfosten aus Metall einschraubbar ist und der an seinem koronalen Ende eine zylinderförmige, mit mindestens einem Grundkörper-Formschlußelement versehene Ringausnehmung zur Aufnahme eines zervikalen, mit mindestens einem zu dem/den Grundkörper-Formschlußelement(en) komplementären Distanzhülsen-Formschlußelement versehenen Zentrierbundes einer Distanzhülse aus Metall aufweist, deren Innendurchmesser größer ist als der Innendurchmesser der Innenbohrung des Grundkörpers bzw. der Zwischenhülse und die mit einer Schulter an den koronalen Rand des Grundkörpers anlegbar ist, wobei komplementäre Formschlußelemente des Grundkörpers und der Distanzhülse im Gebrauchszustand des Zahnimplantates die Distanzhülse relativ zum Grundkörper gegen Verdrehung um die Längsachse des Grundkörpers sichern, und einem mit dem Implantatpfosten fest verbindbaren Befestigungskopf aus Metall für einen Zahnaufbau, sowie ein Einsetzwerkzeug hierfür.

Aus der DE-A-40 28 855 ist ein derartiges Zahnimplantat bekannt, bei dem die Distanzhülse, dort als Distanzhülsen-Oberteil ausgebildet bzw. bezeichnet, mittels eines Distanzhülsen-Unterteiles in den Grundkörper einschraubbar ist, wobei der Befestigungskopf insgesamt durch Formschlußverbindungen gegenüber dem Grundkörper verdrehgesichert angeordnet werden kann, um auf diese Weise das Zahnimplantat insbesondere als Einzelzahnimplantat mit Verdrehsicherung verwenden zu können. Der Befestigungskopf ist bei diesem bekannten Zahnimplantat stets axial exakt mit dem Grundkörper ausgerichtet.

In manchen Anwendungsfällen besteht das Bedürfnis, den Befestigungskopf winkelmäßig verschwenkt gegenüber dem Grundkörper anordnen zu können, da der Grundkörper z. B. bedingt durch lokale Knochenatrophie, gelegentlich schräg in den Kieferknochen implantiert werden muß, während der Befestigungskopf zum optimalen Anbringen des Zahnersatzes und der Einleitung der von diesem aufgenommenen Kaukräfte eine andere winkelmäßige Ausrichtung haben soll, Hierfür ist es bereits bekannt, beispielsweise aus der FR-A-2 623 999, am koronalen Ende eines Grundkörpers bzw. Implantatpfostens ein Kugelgelenk für einen Befestigungskopf anzubringen, wobei jedoch lediglich eine Klemmverbindung mittels einer Sicherungsschraube oder dergleichen vorgesehen und insbesondere nicht gewährleistet ist, daß durch Drehen am Befestigungskopf der Implantatpfosten fest und sicher mit dem Grundkörper verbunden werden kann.

Der Erfindung liegt die Aufgabe zugrunde, das gattungsgemäße Zahnimplantat dahingehend weiterzubilden, daß mit einfachen Mitteln durch eine Schraubbewegung des Befestigungskopfes dieser unter gleichzeitiger Drehung des Implantatpfostens fest mit dem Grundkörper verbunden werden kann.

Erfindungsgemäß wird diese Aufgabe dadurch gelöst, daß der Implantatpfosten an seinem koronalen Ende einen zur koronalen Seite im wesentlichen eben abgeflachten Teilkugelkopf aufweist, dessen Durchmesser größer ist als der Durchmesser eines zwischen einem zervikalen Gewindeabschnittes und dem Teilkugelkopf gelegenen Implantatpfostenschaftes; daß der Befestigungskopf an seinem zervikalen Ende eine Teilkugelschale aufweist, die den Teilkugelkopf des Implantatpfostens umgreift und an ihrem zervikalen Ende eine von dem gewindefreien Implantatpfostenschaft durchsetzbare Schwenköffnung aufweist, deren Durchmesser kleiner als der Durchmesser des Teilkugelkopfes jedoch größer als der Außendurchmesser des Implantatpfostenschaftes ist; daß der Teilkugelkopf und die Teilkugelschale mit zueinander komplementären Mitnehmereinrichtungen zur kardanischen Verbindung des Befestigungskopfes mit dem Implantatpfosten versehen sind; daß die Distanzhülse in ihrem koronalen Bereich eine Lagerpfanne zur Aufnahme der Teilkugelschale bildet; und daß der Befestigungskopf mindestens eine Ansetzeinrichtung für ein Schraubwerkzeug aufweist.

Dabei kann vorgesehen sein, daß der Implantatpfostenschaft einen kleineren Durchmesser hat als der Gewindeabschnitt.

Die Erfindung sieht auch vor, daß die Mitnehmereinrichtungen einen einstückig mit dem Teilkugelkopf ausgebildeten Mitnehmerstift und einen diesen aufnehmenden Mitnehmerschlitz der Teilkugelschale umfassen.

Ferner sieht die Erfindung auch vor, daß der Mitnehmerschlitz zur Schwenköffnung der Teilkugelschale offen ist.

Eine weitere Ausführungsform der Erfindung ist gekennzeichnet durch eine derartige Weite der Schwenköffnung im Verhältnis zum Durchmesser des Implantatpfostenschaftes, daß der Befestigungskopf bei nicht in den Grundkörper eingeschraubten Implantatpfosten von dem Implantatpfosten durch Verschwenken abnehmbar ist.

Auch kann nach der Erfindung vorgesehen sein, daß der Befestigungskopf eine durchgehende, seine koronale Stirnfläche mit dem Inneren der Teilkugelschale verbindenden Zentralbohrung aufläßt.

Dabei kann vorgesehen sein, die Zentralbohrung ein Innengewinde aufweist.

Ferner sieht die Erfindung vor, daß die Zentralbohrung eine Innen-Ansetzeinrichtung für ein Schraubwerkzeug aufweist.

Auch kann nach der Erfindung vorgesehen sein, daß der Befestigungskopf an der Außenfläche seines koronalen Endes eine Ansetzeinrichtung für ein Schraubwerkzeug aufweist.

Eine weitere Ausführungsform der Erfindung ist gekennzeichnet durch eine Formschlußeinrichtung zur Verdrehsicherung der Teilkugelschale relativ zum koronalen Rand der Distanzhülse.

Dabei kann vorgesehen sein, daß der koronale Stirnrand der Distanzhülse und/oder der der Schwenköffnung benachbarte zervikale Randbereich der Außenmantelfläche der Teilkugelschale Formschlußelemente in Form von Oberflächenvertiefungen und/oder -erhöhungen aufweist/aufweisen.

Die Erfindung sieht auch vor, daß der koronale Stirnrand der Distanzhülse eine Stirnverzahnung aufweist.

Die Erfindung sieht dabei auch vor, daß eine zwischen der im wesentlichen ebenen koronalen Stirnfläche des Teilkugelkopfes und der Innenwandung der Teilkugelschale gebildete Kernkammer nach dem Einschrauben des Implantatpfosten mit einem härtbaren Zement oder dergleichen ausfüllbar ist.

Ferner sieht die Erfindung vor, daß der Zement oder dergleichen durch den Mitnehmerschlitz in die Kernkammer einfüllbar ist.

Die Erfindung sieht ferner vor, daß der Zement oder dergleichen durch die Zentralbohrung in die Kernkammer einfüllbar ist.

Dadurch, daß erfindungsgemäß eine kravernische Verbindung zwischen der mit dem Grundkörper verdrehgesichert verbindbaren Distanzhülse bekannter Art und dem Befestigungskopf vorgesehen ist, gelingt es, durch einfaches Drehen des Befestigungskopfes, bewerkstelligt mittels eines geeigneten Schraubwerkzeuges oder dergleichen, unabhängig von dessen relativer Winkelstellung bezüglich des Implantatpfostens und des Grundkörpers den Implantatpfosten fest in den Grundkörper einzuschrauben, so daß eine zuverlässige Verbindung des Befestigungskopfes mit dem Grundkörper gewährleistet ist.

Weitere Merkmale und Vorteile der Erfindung ergeben sich aus der nachfolgenden Beschreibung, in der Ausführungsbeispiele anhand der schematischen Zeichnungen im einzelnen erläutert sind. Dabei zeigt:
- Fig. 1: Ein erstes Ausführungsbeispiel eines Zahnimplantates nach der Erfindung im vertikalen Längsschnitt in Explosionsdarstellung;
- Fig. 2: Das Ausführungsbeispiel von Fig. 1 in zusammengebautem Zustand;
- Fig. 3.: Ein zweites Ausführungsbeispiel eines Zahnimplantates nach der Erfindung in Fig. 1 entsprechender Darstellung; und
- Fig. 4: Das Ausführungsbeispiel von Fig. 3 in zusammengebautem Zustand.

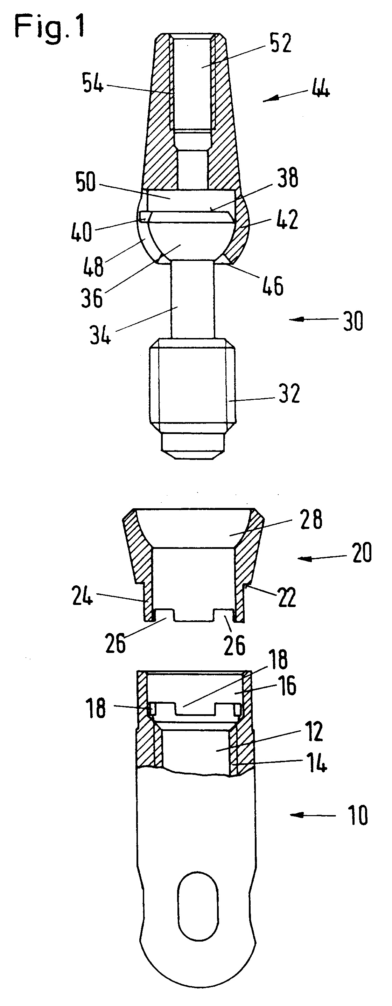

Wie Fig. 1 erkennen läßt, weist das Zahnimplantat nach der Erfindung bei dem dort gezeigten Ausführungsbeispiel einen in den Kieferknochen implantierbaren Grundkörper 10 aus einer Titanlegierung auf, dessen Innenbohrung 12 mit einem Innengewinde 14 versehen ist. Der Grundkörper 10 weist nahe seinem in Fig. 1 nach oben weisenden distalen Rand eine zylinderförmige Ringausnehmung 16 auf, die, wie dies aus der DE-A-40 28 855 bekannt ist - auf die insoweit zur näheren Erläuterung verwiesen wird - mit vier gleichmäßig am Umfang verteilten Formschlußvertiefungen 18 versehen ist.

Ferner läßt Fig. 1 eine Distanzhülse 20, ebenfalls aus einer Titanlegierung bestehend, erkennen, die an ihrem in der Zeichnung nach unten weisenden, distalen Ende im Anschluß an eine Schulter 22, die zur Anlage an den koronalen Stirnrand des Grundkörpers 10 bestimmt ist, einen Zentrierbund 24 aufweist. Der Zentrierbund ist mit vier Formschlußerhebungen 26 versehen, die zu den Formschlußvertiefungen 18 des Grundkörpers 10 komplementär sind und nach dem Einsetzen der Distanzhülse 20 in den Grundkörper 10 erstere gegenüber letzterem verdrehsicher festlegen.

Die Distanzhülse 20 ist an ihrem koronalen Ende zu einer teilkugelförmigen Lagerpfanne 28 erweitert. Ein Implantatpfosten 30, eine Kugelschraube bildend, weist nahe seinem zervikalen Ende einen Gewindeabschnitt 32 zum Einschrauben in das Innengewinde 14 des Grundkörpers 10, in koronaler Richtung daran anschließend einen Schaft 34 und wiederum in koronaler Richtung hieran anschließend einen Teilkugelkopf 36 auf, der an seinem koronalen Ende eine im wesentlichen Ebene Stirnfläche 38 hat. Einstückig mit dem Teilkugelkopf 36 ist ein Mitnehmerstift 40 ausgebildet. Der Teilkugelkopf 36 ist von einer Teilkugelschale 42 eines Befestigungskopfes 44 teilweise umschlossen, deren zervikale Schwenköffnung 46 eine weitere aufweist, die größer ist als der Außendurchmesser des Implantatpfostenschaftes 34, jedoch kleiner als der größte Durchmesser des Teilkugelkopfes 36. In der Teilkugelschale 42 ist ein parallel zur Längsachse des Befestigungskopfes 44 verlaufender Mitnehmerschlitz 48 ausgebildet, der zur Schwenköffnung 46 offen ist. Eine in Fig. 1 oberhalb der Stirnfläche 38 des Teilkugelkopfes 36 gebildete Kernkammer 50 steht über eine Zentralbohrung 52 des Befestigungskopfes 44 mit dessen Stirnfläche in Verbindung. Die Zentralbohrung 52 des Befestigungskopfes 44 ist mit einem Innengewinde 54 versehen. Außerdem weist der Befestigungskopf 44, wenn auch zeichnerisch nicht dargestellt, sowohl innerhalb seiner Zentralbohrung 52 nahe deren koronalem Rand als auch an seiner Außenfläche, ebenfalls nahe seinem koronalen Rand, Ansetzeinrichtungen für ein Schraubwerkzeug auf, nämlich durch entsprechend polygonale Ausbildung des koronalen Endbereiches der Zentralbohrung 52 und entsprechende Abflachungen an der Außenfläche des konisch in koronaler Richtung sich verjüngenden Befestigungskopfes 44.

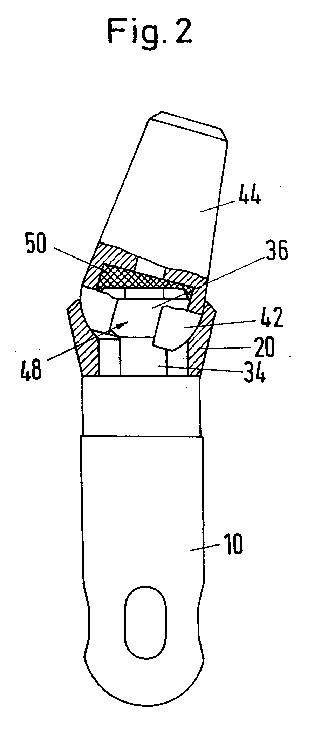

Figur 2 zeigt das Ausführungsbeispiel des Zahnimplantates von Fig. 1 in zusammengebautem Zustand. Dabei ist eine Verdrehsicherung zwischen dem Befestigungskopf 44 und der gegenüber dem Grundkörper 10 verdrehgesichert, wie beschrieben, festgelegten Distanzhülse 20 dadurch gewährleistet, daß durch die Zentralbohrung 52 in die Kernkammer 50 ein Zement eingegeben worden ist, der zu einem unsymmetrischen Formschlußkörper erhärtet ist, welcher ein Verdrehen des Befestigungskopfes 44 infolge der kardanischen Verbindung mit dem Implantatpfosten, dessen Schaft 34 in Fig. 2 zu erkennen ist, verhindert.

Insgesamt ermöglicht die kardanische Verbindung zwischen dem Befestigungskopf 44 und dem Implantatpfosten 30, bewirkt durch den Teilkugelschale 42, den Teilkugelkopf 36, den Mitnehmerstift 40, den Mitnehmerschlitz 48 und die Lagerung in der Lagerpfanne 28, daß auch bei im Knochen schräg gestelltem Grundkörper 10 der Befestigungskopf 44 innerhalb des gewünschten Bereiches in einem beliebigen Neigungswinkel relativ zum Grundkörper körper 10 festgestellt werden kann. Natürlich könnte in bekannter Weise zwischen dem Grundkörper 10 und dem Gewindeabschnitt 32 des Implantatpfostens auch eine elastische Zwischenhülse bekannter Art angeordnet sein, wobei diese sich aber nicht empfiehlt, wenn besonders zuverlässig hohe Kräfte zwischen dem Befestigungskopf 44 und dem Grundkörper 10 übertragen werden sollen.

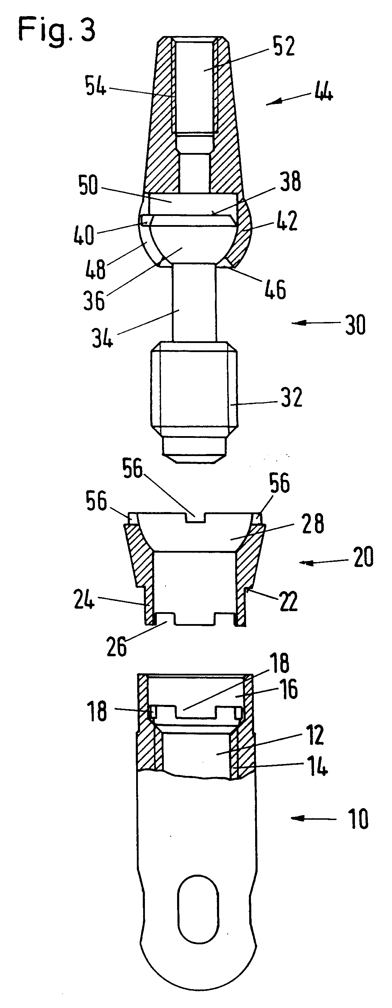

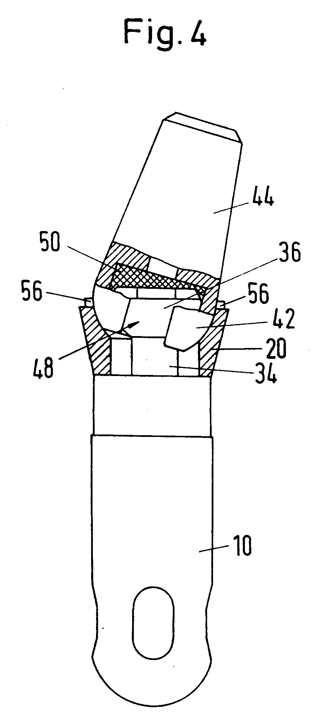

Das in den Figuren 3 und 4 gezeigte Ausführungsbeispiel unterscheidet sich von den in den Figuren 1 und 2 wiedergegebenen dadurch, daß hier am koronalen Stirnrand der Distanzhülse 20 vier Formschlußvertiefungen 56 vorgesehen sind, die sich beim Anziehen des Befestigungskopfes 44 in die Außenfläche der Teilkugelschale 42 "einkerben" und so eine Verdrehsicherung des Befestigungskopfes 44 relativ zur Distanzhülse 20 gewährleisten, wodurch der Befestigungskopf 44 und damit der darauf befindliche, in der Zeichnung nicht gezeigte Zahnaufbau, der z. B. mittels einer Schraube in der Zentralbohrung 52 festgelegt werden kann, gegenüber dem Grundkörper 10 verdrehgesichert ist. Dies empfiehlt sich insbesondere bei einer Verwendung eines Zahnimplantates nach der Erfindung als Einzelzahnimplantat.

Eine zusätzliche Verdrehsicherung wird natürlich auch bei den Ausführungsbeispielen von Fig. 3 und 4 durch den Zement-Formschlußkörper 50 erzielt.

## Patentansprüche

1. Enossales Zahnimplantat für einen festsitzenden Zahnersatz, mit einem in den Kieferknochen implantierbaren, im wesentlichen zylindrischen Grundkörper (10) aus Metall, in dessen an seinem koronalen Ende offene Innenbohrung (12), ggf. unter Zwischenschaltung einer Zwischenhülse aus elastischem Material, ein Implantatpfosten (30) aus Metall einschraubbar ist und der an seinem koronalen Ende eine zylinderförmige, mit mindestens einem Grundkörper-Formschlußelement (18) versehene Ringausnehmung (16) zur Aufnahme eines zervikalen, mit mindestens einem zu dem/den Grundkörper-Formschlußelement(en) komplementären Distanzhülsen-Formschlußelement (26) versehenen Zentrierbundes (24) einer Distanzhülse (20) aus Metall aufweist, deren Innendurchmesser größer ist als der Innendurchmesser der Innenbohrung des Grundkörpers bzw. der Zwischenhülse und die mit einer Schulter (22) an den koronalen Rand des Grundkörpers anlegbar ist, wobei die komplementären Formschlußelemente des Grundkörpers (10) und der Distanzhülse (20) im Gebrauchszustand des Zahnimplantates die Distanzhülse relativ zum Grundkörper gegen Verdrehung um die Längsachse des Grundkörpers sichern, und einem mit dem Implantatpfosten fest verbindbaren Befestigungskopf (44) aus Metall für einen Zahnaufbau, dadurch gekennzeichnet, daß der Implantatpfosten (30) an seinem koronalen Ende einen zur koronalen Seite im wesentlichen eben abgeflachten Teilkugelkopf (36) aufweist, dessen Durchmesser größer ist als der Durchmesser eines zwischen einem zervikalen Gewindeabschnittes (32) und dem Teilkugelkopf (36) gelegenen Implantatpfostenschaftes (30); daß der Befestigungskopf (44) an seinem zervikalen Ende eine Teilkugelschale (42) aufweist, die den Teilkugelkopf (36) des Implantatpfostens (30) umgreift und an ihrem zervikalen Ende eine von dem gewindefreien Implantatpfostenschaft (34) durchsetzbare Schwenköffnung (46) aufweist, deren Durchmesser kleiner als der Durchmesser des Teilkugelkopfes (36) jedoch größer als der Außendurchmesser des Implantatpfostenschaftes (34) ist; daß der Teilkugelkopf (36) und die Teilkugelschale (42) mit zueinander komplementären Mitnehmereinrichtungen (40, 48) zur kardanischen Verbindung des Befestigungskopfes (44) mit dem Implantatpfosten (30) versehen sind; daß die Distanzhülse (20) in ihrem koronalen Bereich eine Lagerpfanne (28) zur Aufnahme der Teilkugelschale (42) bildet; und daß der Befestigungskopf (44) mindestens eine Ansetzeinrichtung für ein Schraubwerkzeug (62) aufweist.

2. Zahnimplantat nach Anspruch 1, dadurch gekennzeichnet, daß der Implantatpfostenschaft (34) einen kleineren Durchmesser hat als der Gewindeabschnitt (32).

3. Zahnimplantat nach Anspruch 1 oder 2, dadurch gekennzeichnet, daß die Mitnehmereinrichtungen einen einstückig mit dem Teilkugelkopf (32) ausgebildeten Mitnehmerstift (40) und einen diesen aufnehmenden Mitnehmerschlitz (48) der Teilkugelschale (42) umfassen.

4. Zahnimplantat nach Anspruch 3, dadurch gekennzeichnet, daß der Mitnehmerschlitz (48) zur Schwenköffnung (46) der Teilkugelschale (42) offen ist.

5. Zahnimplantat nach Anspruch 4, gekennzeichnet durch eine derartige Weite der Schwenköffnung (46) im Verhältnis zum Durchmesser des Implantatpfostenschaftes (34), daß der Befestigungskopf (44) bei nicht in den Grundkörper (10) eingeschraubten Implantatpfosten (30) von dem Implantatpfosten (30) durch Verschwenken abnehmbar ist.

6. Zahnimplantat nach einem der vorangehenden Ansprüche, dadurch gekennzeichnet, daß der Befestigungskopf (44) eine durchgehende, seine koronale Stirnfläche mit dem Inneren der Teilkugelschale (42) verbindenden Zentralbohrung (52) aufläßt.

7. Zahnimplantat nach Anspruch 6, dadurch gekennzeichnet, daß die Zentralbohrung (52) ein Innengewinde (54) aufweist.

8. Zahnimplantat nach Anspruch 6 oder 7, dadurch gekennzeichnet, daß die Zentralbohrung (52) eine Innen-Ansetzeinrichtung für ein Schraubwerkzeug (62) aufweist.

9. Zahnimplantat nach einem der vorangehenden Ansprüche, dadurch gekennzeichnet, daß der Befestigungskopf (44) an der Außenfläche seines koronalen Endes eine Ansetzeinrichtung für ein Schraubwerkzeug (62) aufweist.

10. Zahnimplantat nach einem der vorangehenden Ansprüche, gekennzeichnet durch eine Formschlußeinrichtung (56) zur Verdrehsicherung der Teilkugelschale (42) relativ zum koronalen Rand der Distanzhülse (20).

11. Zahnimplantat nach Anspruch 10, dadurch gekennzeichnet, daß der koronale Stirnrand der Distanzhülse (20) und/oder der der Schwenköffnung (46) benachbarte zervikale Randbereich der Außenmantelfläche der Teilkugelschale (42) Formschlußelemente in Form von Oberflächenvertiefungen (56) und/oder -erhöhungen aufweist/aufweisen.

12. Zahnimplantat nach Anspruch 11, dadurch gekennzeichnet, daß der koronale Stirnrand der Distanzhülse (20) eine Stirnverzahnung aufweist.

13. Zahnimplantat nach einem der vorangehenden Ansprüche, dadurch gekennzeichnet, daß eine zwischen der im wesentlichen ebenen koronalen Stirnfläche (38) des Teilkugelkopfes (36) und der Innenwandung der Teilkugelschale (42) gebildete Kernkammer (50) nach dem Einschrauben des Implantatpfosten (30) mit einem härtbaren Zement oder dergleichen ausfüllbar ist.

14. Zahnimplantat nach Anspruch 13 und Anspruch 3, dadurch gekennzeichent, daß der Zement oder dergleichen durch den Mitnehmerschlitz (48) in die Kernkammer (50) einfüllbar ist.

15. Zahnimplantat nach Anspruch 13 oder 14 und Anspruch 6, dadurch gekennzeichnet, daß der Zement oder dergleichen durch die Zentralbohrung (52) in die Kernkammer (50) einfüllbar ist.

## Claims

1. An endo-osseous dental implant for a fixed dental prosthesis, comprising a substantially cylindrical base member (10) of metal, which is adapted to be implanted in the jawbone and into the inner bore (12) of which, which is open at its coronal end, a metal implant post (30) can be screwed, if required with the interposition of an intermediate sleeve of elastic material, and which base member has at its coronal end a cylindrical annular recess (16), provided with at least one base member positive locking element (18), to receive a cervical centring collar (24) of a spacer sleeve (20) of metal, said centring collar (24) being provided with a spacer sleeve positive locking element (26) complementary to the base member positive locking element or elements, the inside diameter of the spacer sleeve being larger than the inside diameter of the inner bore of the base member or of the intermediate sleeve, said spacer sleeve being adapted to bear by a shoulder (22) against the coronal edge of the base member, the complementary positive locking elements of the base member (10) and of the spacer sleeve (20), when the dental implant is in the state of use, securing the spacer sleeve relatively to the base member against rotation about the longitudinal axis of the base member, and further comprising a metal fixing head (44) for a dental prosthesis, said fixing head being adapted to be rigidly connected to the implant post, characterised in that the implant post (30) has, at its coronal end, a part-spherical head (36) which is flattened to be substantially flat towards the coronal side and the diameter of which is larger than the diameter of an implant post stem (30) situated between a cervical screwthreaded portion (32) and the part-spherical head (36); in that the fixing head (44) has at its cervical end a part-spherical cup (42) which engages around the part-spherical head (36) of the implant post (30) and at the cervical end of the part-spherical cup has a pivot opening (46) through which the non-screwthreaded implant post stem (34) can pass, the diameter of said opening (46) being smaller than the diameter of the part-spherical head (36) but larger than the outside diameter of the implant post stem (34); in that the part-spherical head (36) and the part-spherical cup (42) are provided with driver means (40, 48) which are complementary to one another and which are intended for the cardan connection of the fixing bead (44) to the implant post (30); in that the spacer sleeve (20) in its coronal zone forms a bearing socket (28) to receive the part-spherical cup (42); and in that the fixing head (44) has at least one application means for a screw tool (62).

2. A dental implant according to claim 1, characterised in that the implant post stem (34) has a smaller diameter than the screwthreaded portion (32).

3. A dental implant according to claim 1 or 2, characterised in that the driver means comprise a driver pin (40) formed integrally with the part-spherical head (32) and a driver slot (48) of the part-spherical cup (42), said driver slot (48) receiving the driver pin (40).

4. A dental implant according to claim 3, characterised in that the driver slot (48) is open to the pivot opening (46) of the port-spherical cup (42).

5. A dental implant according to claim 4, characterised by a width of the pivot opening (46) in relation to the diameter of the implant post stem (34) such that the fixing head (44) is removable from the implant post (30) by pivoting when the implant post (30) is not screwed into the base member (10).

6. A dental implant according to any one of the preceding claims, characterised in that the fixing head (44) leaves open a continuous central bore (52) connecting its coronal end face with the interior of the part-spherical cup (42).

7. A dental implant according to claim 6, characterised in that the central bore (52) comprises an internal screwthread (54).

8. A dental implant according to claim 6 or 7, characterised in that the central bore (52) has an internal application means for a screw tool (62).

9. A dental implant according to any one of the preceding claims, characterised in that the fixing head (44) has at the outer surface of its coronal end an application means for a screw tool (62).

10. A dental implant according to any one of the preceding claims, characterised by a positive locking means (56) for securing the part-spherical cup (42) against rotation relatively to the coronal edge of the spacer sleeve (20).

11. A dental implant according to claim 10, characterised in that the coronal end edge of the spacer sleeve (20) and/or of the cervical end zone of the outer generatrix of the part-spherical cup (42) adjacent the pivot opening (46) comprise(s) positive locking elements in the form of surface cavities (56) and/or projections.

12. A dental implant according to claim 11, characterised in that the coronal end edge of the spacer sleeve (20) has an end toothing.

13. A dental implant according to any one of the preceding claims, characterised in that a core chamber (50) formed between the substantially flat coronal end face (38) of the part-spherical head (36) and the inner wall of the part-spherical cup (42) is adapted to be filled with a curable cement or the like after the implant post (30) has been screwed in.

14. A dental implant according to claim 13 and claim 3, characterised in that the cement or the like is adapted to be introduced into the core chamber (50) through the driver slot (48).

15. A dental implant according to claim 13 or 14 and claim 6, characterised in that the cement or the like is adapted to be introduced into the core chamber (50) through the central bore (52).

## Revendications

1. Implant dentaire endo-osseux pour une prothèse dentaire fixe, comprenant un corps de base sensiblement cylindrique (10) en métal qui est implantable dans l'os maxillaire, dont le perçage intérieur (12) ouvert à son extrémité coronaire reçoit par vissage un pilier d'implant (30) en métal, éventuellement en intercalant une douille intermédiaire en matériau élastique et qui, à son extrémité coronaire, comporte un évidement annulaire cylindrique (16) pourvu d'au moins un élément de liaison par complémentarité de formes de corps de base (18) et destiné à recevoir un collet de centrage cervical (24) qui est pourvu d'au moins un élément de liaison par complémentarité de formes d'entretoise (26) complémentaire du/des éléments de liaison par complémentarité de formes de corps de base et qui fait partie d'une entretoise (20) en métal dont le diamètre intérieur est supérieur au diamètre intérieur du perçage intérieur du corps de base ou de la douille intermédiaire et dont un épaulement (22) vient en butée contre le bord coronaire du corps de base, les éléments complémentaires de liaison par complémentarité de formes du corps de base (10) et de l'entretoise (20) empêchant, lorsque l'implant dentaire est en position d'utilisation, l'entretoise de tourner par rapport au corps de base autour de l'axe longitudinal du corps de base, et comprenant une tête de fixation (44) en métal pouvant être solidarisée au pilier d'implant pour restaurer la dent, caractérisé en ce que le pilier d'implant (30) comporte, à son extrémité coronaire, une tête partiellement sphérique (36) qui est sensiblement aplatie vers le côté coronaire et dont le diamètre est supérieur au diamètre du fût de pilier d'implant (30) situé entre un segment cervical fileté (32) et la tête partiellement sphérique (36) ; en ce que la tête de fixation (44) comporte, à son extrémité cervicale, une cuvette partiellement sphérique (42) qui entoure la tête partiellement sphérique (36) du pilier d'implant (30) et comporte, à son extrémité cervicale, une ouverture de pivotement (46) qui peut être traversée par le fût non fileté de pilier d'implant (34) et dont le diamètre est inférieur au diamètre de la tête partiellement sphérique (36), mais supérieur au diamètre extérieur du fût de pilier d'implant (34) ; en ce que la tête partiellement sphérique (36) et la cuvette partiellement sphérique (42) sont pourvues de dispositifs d'entraînement (40, 48) complémentaires entre eux pour créer une liaison par cardan entre la tête de fixation (44) et le pilier d'implant (30) ; en ce que l'entretoise (20) forme, dans sa zone coronaire, une cavité d'appui (28) pour recevoir la cuvette partiellement sphérique (42) ; et en ce que la tête de fixation (44) comporte au moins un dispositif de prise pour un outil de vissage (62).

2. Implant dentaire selon la revendication 1, caractérisé en ce que le fût de pilier d'implant (34) possède un diamètre inférieur à celui du segment fileté (32).

3. Implant dentaire selon la revendication 1 ou 2, caractérisé en ce que les dispositifs d'entraînement comprennent un ergot d'entraînement (40) faisant corps avec la tête partiellement sphérique (32) et une fente d'entraînement (48) qui le reçoit et qui est ménagée dans la cuvette partiellement sphérique (42).

4. Implant dentaire selon la revendication 3, caractérisé en ce que la fente d'entraînement (48) est ouverte vers l'ouverture de pivotement (46) de la cuvette partiellement sphérique (42).

5. Implant dentaire selon la revendication 4, caractérisé en ce que la largeur de l'ouverture de pivotement (46) par rapport au diamètre du fût de pilier d'implant (34) est telle que la tête de fixation (44) peut être retirée du pilier d'implant (30) par pivotement lorsque le pilier d'implant (30) n'est pas vissé dans le corps de base (10).

6. Implant dentaire selon une des revendications précédentes, caractérisé on ce que la tête de fixation (44) comporte un perçage central débouchant (52) qui relie sa face frontale coronaire à l'intérieur de la cuvette partiellement sphérique (42).

7. Implant dentaire selon la revendication 6, caractérisé en ce que le perçage central (52) comporte un filet intérieur (54).

8. Implant dentaire selon la revendication 6 ou 7, caractérisé en ce que le perçage central (52) comporte un dispositif de prise intérieure pour un outil de vissage (62).

9. Implant dentaire selon une des revendications précédentes, caractérisé en ce que la tête de fixation (44) comporte, sur la surface extérieure de son extrémité coronaire, un dispositif de prise pour un outil de vissage (62).

10. Implant dentaire selon une des revendications précédentes, caractérisé en ce qu'il comporte un dispositif de liaison par complémentarité de formes (56) pour empêcher la cuvette partiellement sphérique (42) de tourner par rapport au bord coronaire de l'entretoise (20).

11. Implant dentaire selon la revendication 10, caractérisé en ce que le bord frontal coronaire de l'entretoise (20) et/ou la zone marginale cervicale appartenant à la surface périphérique extérieure de la cuvette partiellement sphérique (42) et voisine de l'ouverture de pivotement (46) comporte/comportent des éléments de liaison par complémentarité de formes conçus comme des renfoncements (56) et/ou reliefs superficiels.

12. Implant dentaire selon la revendication 11, caractérisé en ce que le bord frontal coronaire de l'entretoise (20) comporte une denture frontale.

13. Implant dentaire selon une des revendications précédentes, caractérisé en ce qu'une chambre centrale (50) formée entre la face frontale coronaire sensiblement plane (38) de la tête partiellement sphérique (36) et la paroi intérieure de la cuvette partiellement sphérique (42) peut être remplie de ciment durcissable ou d'un matériau analogue après le vissage du pilier d'implant (30).

14. Implant dentaire selon la revendication 13 et la revendication 3, caractérisé en ce que le ciment ou le matériau analogue peut être introduit dans la chambre centrale (50) par la fente d'entraînement (48).

15. Implant dentaire selon la revendication 13 ou 14 et la revendication 6, caractérisé en ce que le ciment ou le matériau analogue peut être introduit dans la chambre centrale (50) par le perçage central (52).
